# EUROPEAN PATENT APPLICATION

(11) **EP 4 650 321 A2**
(43) Date of publication of application: **19.11.2025**
(21) Application number: 25168635.8
(22) Date of filing: 04.04.2025
(51) Int. Cl.: C01B 25/45, H01M 4/58, H01M 4/62

(54) **POSITIVE ELECTRODE ACTIVE MATERIAL FOR RECHARGEABLE LITHIUM BATTERY, PREPARATION METHOD OF THE SAME, AND RECHARGEABLE LITHIUM BATTERY INCLUDING THE SAME**

(30) Priority: 22.04.2024 KR 20240053551
(71) Applicant: SAMSUNG SDI CO., LTD., Yongin-si, Gyeonggi-do 17084 (KR)
(72) Inventor: DOO, Sungwook, Yongin-si, Gyeonggi-do 17084 (KR); LEE, Soonrewl, Yongin-si, Gyeonggi-do 17084 (KR); KIM, Young-Ki, Yongin-si, Gyeonggi-do 17084 (KR); CHOI, Aram, Yongin-si, Gyeonggi-do 17084 (KR); KIM, Sangmi, Yongin-si, Gyeonggi-do 17084 (KR); KANG, Gwiwoon, Yongin-si, Gyeonggi-do 17084 (KR)
(74) Representative: Marks & Clerk LLP

(57) **Abstract**

Examples include a positive electrode active material, a preparation method of the positive electrode active material, and a rechargeable lithium battery including the positive electrode active material. An example positive electrode active material includes a first particle which has an olivine structure and a crystal structure that belongs to a Pbnm space group, wherein an X-ray diffraction (XRD) spectrum of the first particle obtained using Cu-Kα radiation exhibits a first peak corresponding to a (200) plane of the first particle and a second peak corresponding to a (020) plane of the first particle, a full width at half maximum (FWHM) of the first peak is in a range of at least about 0.14°, and a ratio of an intensity of the first peak to an intensity of the second peak is in a range of at least about 0.55.

## Description

### BACKGROUND

Examples of the present disclosure herein relate to a positive electrode active material for a rechargeable lithium battery, a preparation method of the positive electrode active material, and a rechargeable lithium battery including the positive electrode active material. Examples also relate to a positive electrode active material containing an olivine-based lithium compound, a preparation method of the positive electrode active material, and a rechargeable lithium battery including the positive electrode active material.

With increasing use of battery-using electronic devices, such as, e.g., mobile phones, laptop computers, electric vehicles, and the like, demand for a rechargeable battery with high energy density and high capacity has increased. Accordingly, improving performance of the rechargeable lithium battery may be advantageous.

The rechargeable lithium battery typically includes a positive electrode and a negative electrode containing an active material capable of intercalation and deintercalation of lithium ions, and an electrolyte solution. Electrical energy is produced by oxidation and reduction reactions when the lithium ions are intercalated and deintercalated into/from the positive electrode and the negative electrode.

### SUMMARY

Examples of the present disclosure include a positive electrode active material having high energy density, high operating voltage, and high conductivity. In addition, examples of the present disclosure include a positive electrode active material configured to rapidly diffuse a large quantity of Li⁺ ions.

Examples of the present disclosure also include a rechargeable lithium battery having high energy density, high operating voltage, high charge-discharge efficiency, and improved low-temperature characteristics.

An example embodiment of the present disclosure includes a positive electrode active material including a first particle that has an olivine structure, and a crystal structure that belongs to a Pbnm (e.g. orthorhombic) space group, wherein an X-ray diffraction (XRD) spectrum of the positive electrode active material obtained using Cu-Kα radiation may exhibit a first peak corresponding to a (200) plane of the first particle and a second peak corresponding to a (020) plane of the first particle, and a full width at half maximum (FWHM) of the first peak may be in a range of at least about 0.14° (e.g. about 0.14° to about 0.25°), and a ratio of an intensity of the first peak/an intensity of the second peak may be in a range of at least about 0.55 (e.g. about 0.55 to about 0.75).

In an example embodiment of the present disclosure, a preparation method of a positive electrode active material may include mixing an iron phosphate precursor, a lithium source, and a carbon source to form a first mixture, drying the first mixture, and calcining a second mixture in which the dried first mixture and a dopant source are mixed, and the dopant source may contain at least one of a magnesium compound, a titanium compound, a vanadium compound, and an aluminium compound.

In an example embodiment of the present disclosure, a rechargeable lithium battery includes a positive electrode, a negative electrode, a separator, and an electrolyte solution, and the positive electrode includes the positive electrode active material according to an example embodiment of the present disclosure.

At least some of the above and other features of the invention are set out in the claims.

### BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:
FIG. 1 is a simplified conceptual diagram illustrating a rechargeable lithium battery according to example embodiments of the present disclosure;
FIGS. 2 to 5 are schematic views each illustrating a rechargeable lithium battery according to an example embodiment, FIG. 2 illustrates a cylindrical battery, FIG. 3 illustrates a prismatic battery, and FIGS. 4 and 5 illustrate pouch-type batteries;
FIGS. 6 and 7 are enlarged views of a positive electrode active material layer of a rechargeable lithium battery according to example embodiments of the present disclosure;
FIG. 8 is a perspective view illustrating a primary particle of a first particle according to example embodiments of the present disclosure;
FIG. 9 is a flowchart showing a preparation method of a positive electrode active material according to example embodiments of the present disclosure;
FIGS. 10 and 11 are scanning electron microscope (SEM) images of a positive electrode active material according to example embodiments of the present disclosure; and
FIG. 12 is a graph showing results on XRD spectra of positive electrode active materials according to examples and comparative examples of the present disclosure.

### DETAILED DESCRIPTION

In order to fully understand the configuration and effect of the present disclosure, example embodiments of the present disclosure are described below in more detail with reference to the accompanying drawings. The present disclosure may, however, be embodied in various forms and should not be construed as limited to the example embodiments set forth herein, and various changes and modifications can be made. Rather, these example embodiments are provided so that this disclosure is thorough and complete, and will fully convey the scope of the present disclosure to those skilled in the art to which the present disclosure pertains.

In this specification, it is understood that, when an element is referred to as being "on" another element, the element may be directly on the other element or intervening elements may be present therebetween. In the drawings, thicknesses of components are exaggerated for effectively explaining the technical contents. Like reference numerals or symbols refer to like elements throughout the specification.

Example embodiments described herein are explained with reference to cross-sectional views and/or plan views, which are ideal illustrations of the present disclosure. In the drawings, thicknesses of films and regions are exaggerated for effectively explaining the technical contents. Accordingly, the regions illustrated in the drawings have schematic properties, and the shapes of the regions illustrated in the drawings are intended to illustrate a specific shape of the regions of the device and are not intended to limit the scope of the disclosure. In various example embodiments of the present specification, terms such as first, second, and third are used to describe various components, but these components should not be limited by these terms. These terms are merely used to distinguish one component from another. Example embodiments described and illustrated herein also include complementary example embodiments thereof.

The terminology used herein is for describing example embodiments and is not intended to limit the present disclosure. In this specification, the singular forms are intended to include the plural forms as well, unless the context clearly indicates otherwise. The terms "comprises/includes" and/or "comprising/including" used in this specification do not exclude the presence or addition of one or more other components.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

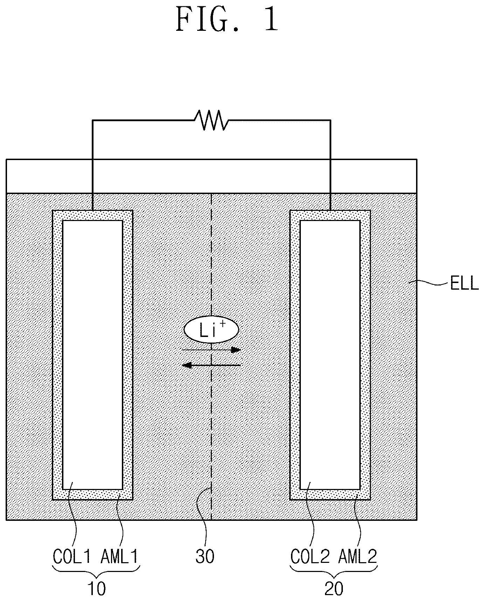

FIG. 1 is a simplified conceptual diagram illustrating a rechargeable lithium battery according to example embodiments of the present disclosure. Referring to FIG. 1, the rechargeable lithium battery includes a positive electrode 10, a negative electrode 20, a separator 30, and an electrolyte solution ELL.

The positive electrode 10 and the negative electrode 20 may be spaced apart from each other, with the separator 30 therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

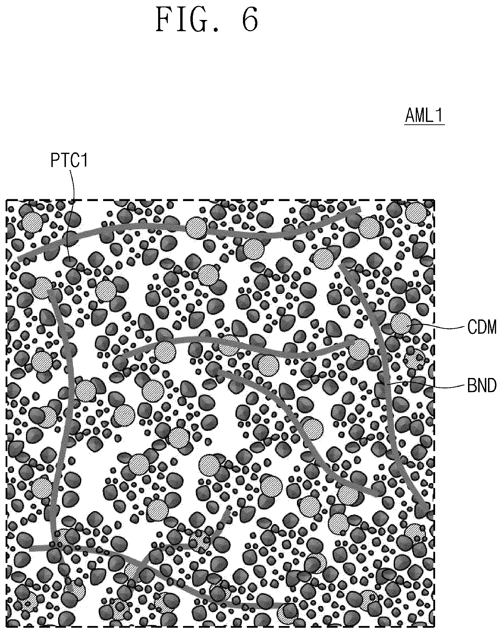

The positive electrode 10 for a rechargeable lithium battery may include a current collector COL1 and a positive electrode active material layer AML1 formed on the current collector COL1. The positive electrode active material layer AML1 may include a positive electrode active material and may further include a binder and/or a conductive material. The positive electrode active material layer AML1 according to example embodiments of the present disclosure is described in detail with reference to FIGS. 6 to 8. Al may be included in the current collector COL1, but is not limited thereto.

### Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include a range of about 90 wt% to about 99 wt% of the negative electrode active material, a range of about 0.5 wt% to about 5 wt% of the binder, and about 0 wt% to about 5 wt% of the conductive material.

The binder may be configured to attach the negative electrode active material particles to each other and also to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included thereto. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be configured to impart conductivity (e.g., electrical conductivity) to the electrode. Any material that does not cause chemical change (e.g., does not cause an undesirable chemical change in the rechargeable lithium battery), and that conducts electrons, can be used in the battery. Non-limiting examples thereof may include a carbon-based material such as or including at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as, e.g., a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), and a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in a form of, or may include, silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

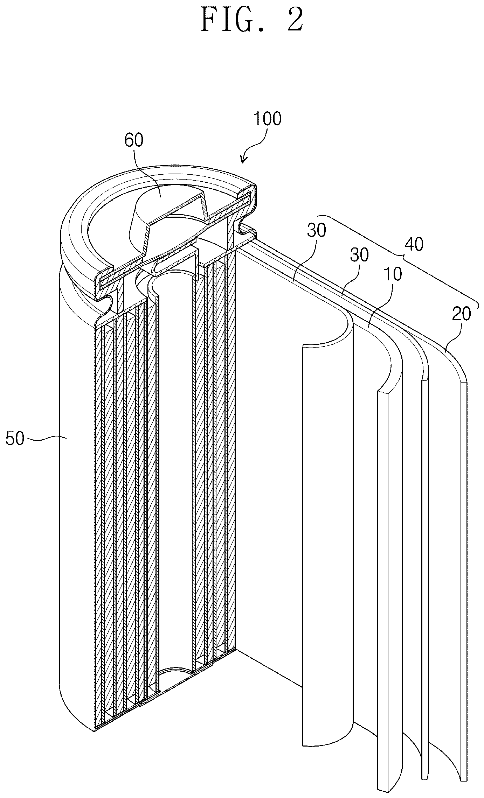

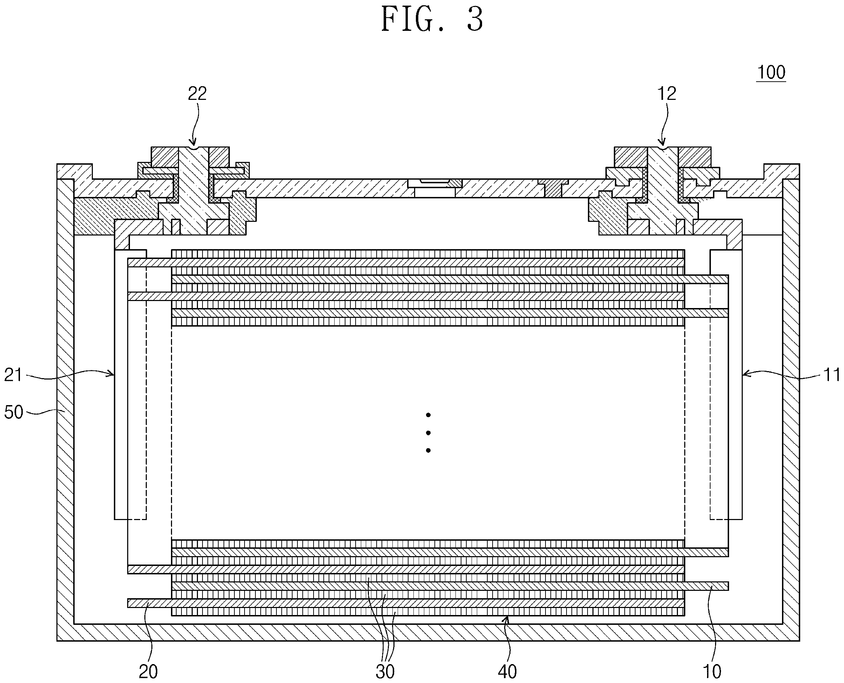

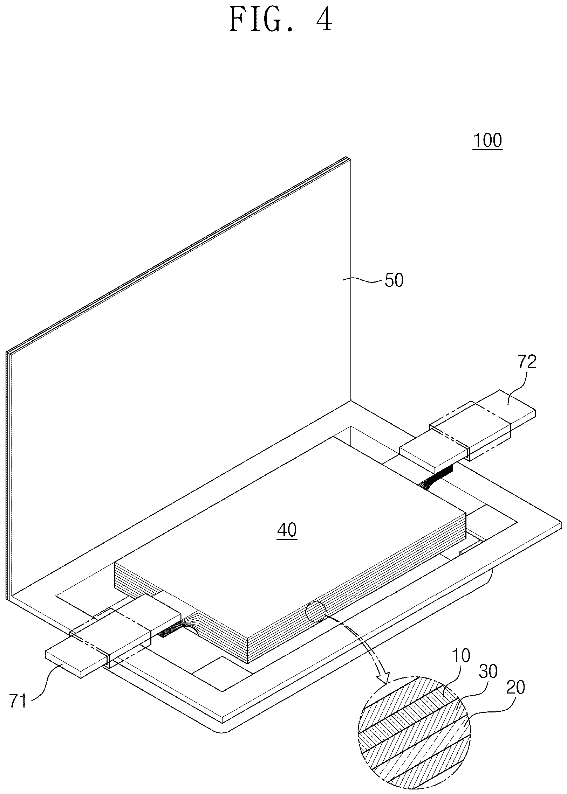

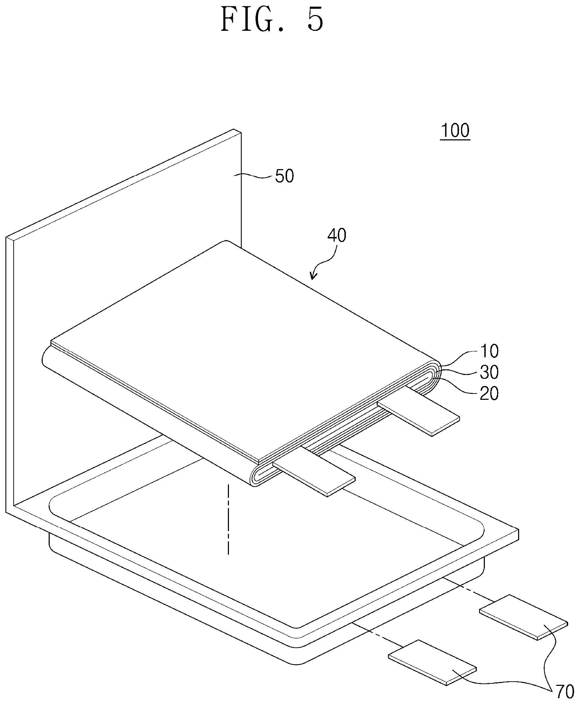

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, and may also include, for example, a positive electrode tab 71 and a negative electrode tab 72 as illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

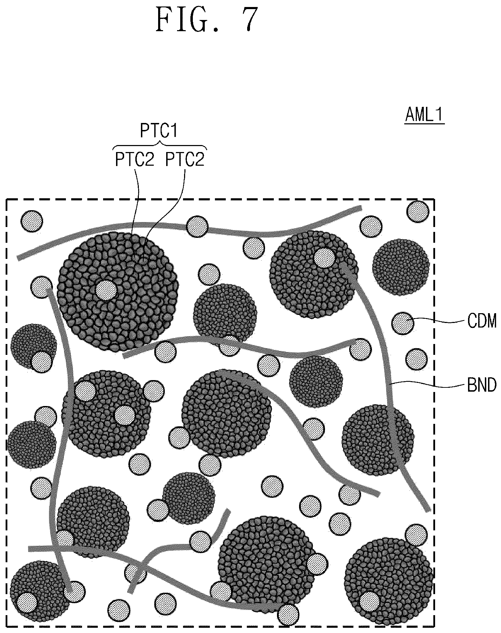

FIGS. 6 and 7 are enlarged views of a positive electrode active material layer of a rechargeable lithium battery according to example embodiments of the present disclosure.

Referring to FIGS. 6 and 7, as described above, the positive electrode active material layer AML1 (see FIG. 1) may include a first particle PTC1, a conductive material CDM, and a binder BND. A plurality of first particles PTC1 may constitute a positive electrode active material according to example embodiments of the present disclosure.

The positive electrode active material layer AML1 may further include an additive as a sacrificial positive electrode.

An amount of the positive electrode active material in the positive electrode active material layer AML1 may be in a range of about 90 wt% to about 99.5 wt% with respect to 100 wt% of the positive electrode active material layer AML1. An amount of each, or at least one, of the binder BND and the conductive material CDM may be in a range of about 0.5 wt% to about 5 wt% with respect to 100 wt% of the positive electrode active material layer AML1.

The binder BND may be configured to bind the first particle PTC1 and the conductive material CDM to each other. For example, the binder BND may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, and nylon, but an example embodiment of the present disclosure is not limited thereto.

The conductive material CDM may be configured to improve conductivity of the positive electrode active material layer AML1. Any conductive material that does not cause chemical changes in the positive electrode active material layer AML1 may be used, without limitation, as the conductive material CDM. Examples of the conductive material CDM may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminium, silver, etc., in a form of a metal powder or a metal fiber; a conductive polymer such as a polyphenylene derivative; or a mixture thereof.

Hereinafter, the first particle PTC1 is described in more detail.

### First Particle PTC1

The first particle PTC1 has an olivine structure. The first particle PTC1 may include an olivine-based lithium compound represented by Formula 1 below.

Formula 1: LiₐFeₓMn_{1-(x+y)}B_{y}PO_{4-c}

In Formula 1 above, 0.8<a≤1.2, 0≤x≤1, 0≤y≤0.05, and 0≤c≤0.05 may be satisfied. B may be or include at least one of Mg, Ti, V, and Al. B may be or include a dopant doped into the first particle PTC1. For example, B may contain Ti. For example, 0.001≤y≤0.05 may be satisfied. B may control the sizes of primary particles to be substantially uniform.

According to an example embodiment of the present disclosure, referring back to FIG. 6, the first particle PTC1 may have a single particle form. In this specification, the single particle may refer to one particle that exists alone without a grain boundary therein. In terms of morphology, the single particle may refer to one particle, a monolith structure, a single unitary structure, or a non-aggregated particle, existing as an independent phase in which particles do not aggregate with each other. For example, the single particle may be or include a single crystal. Alternatively, the single particle may be or include a particle containing a few crystals. The single particle may be independently separated. Alternatively, the single particle may have a range of about 2 to about 100 single particles bound to each other. That is, the first particle PTC1 may be provided in various sizes. For example, the first particle PTC1 may have an average particle diameter of about 500 nm to about 2.5 µm, for example, about 1 µm. The first particle PTC1 may have a minimum particle diameter, which is the particle diameter of a first primary particle, in a range of about 50 nm to about 2 µm, about 100 nm to about 500 nm, or about 200 nm to about 300 nm. For example, the minimum particle diameter may refer to a value obtained by measuring diameters of about 30 first primary particles randomly selected from an electron micrograph of a positive electrode active material.

The first particle PTC1 may have an average particle diameter in a range of about 500 nm to about 2.5 µm. For example, the average particle diameter of the first particle PTC1 may be about 1 µm. In an example embodiment, the average particle diameter may be measured with a particle size analyzer. The average particle diameter may refer to a diameter (D50) of particles at a cumulative volume of about 50 vol% in a particle size distribution.

In an example embodiment, the first particle PTC1 may include a coating layer on a surface thereof. The coating layer may cover the entire surface of the first particle PTC1, or may cover a portion of the surface of the first particle PTC1. For example, the coating layer may include carbon and/or a carbon-containing compound. The first particle PTC1 may have improved structural stability and electrical conductivity due to the coating layer.

The coating layer may further include at least one of a titanium-containing compound, a magnesium-containing compound, and a vanadium-containing compound. A metal-containing compound, such as the titanium-containing compound, the magnesium-containing compound, and the vanadium-containing compound, may be or include, for example, at least one of a metal oxide, a metal hydroxide, a metal carbonate, or a composite or mixture thereof. The metal-containing compound may further include another metal or non-metal element. For example, the metal-containing compound may further include lithium.

The first particle PTC1 may further include carbon derived from the coating layer, described above. An amount of carbon element in the first particle PTC1 may be in a range of about 0.5 wt% to about 10 wt%, about 1 wt% to about 3 wt%, or about 1.5 wt% to about 2.5 wt%.

According to another example embodiment of the present disclosure, referring back to FIG. 7, the first particle PTC1 may be in a form of polycrystal, and may include a secondary particle in which at least two second primary particles are aggregated. In other words, one first particle PTC1 may include a plurality of second particles PTC2 that are aggregated together. For example, the second particles PTC2 may each be a second primary particle. The first particle PTC1 may have a substantially spherical or substantially oval shape.

In an example embodiment, the first particle PTC1 may further include a grain boundary coating layer on surfaces of the second particles PTC2. The grain boundary coating layer may be present inside the first particle PTC1. The grain boundary coating layer may be formed along an interface between the second particles PTC2 inside the first particle PTC1. In other words, the grain boundary coating layer may refer to a material applied to the grain boundary inside the first particle PTC1. The grain boundary coating layer may include, e.g., carbon and/or a carbon-containing compound. The grain boundary coating layer may further include at least one of a titanium-containing compound, a magnesium-containing compound, and a vanadium-containing compound.

The inside of the first particle PTC1, described above, may refer to substantially an entire inner region of the first particle PTC1 excluding the surface of the first particle PTC1. For example, the inside of the first particle PTC1 may refer to substantially an entire inner region from about 10 nm depth from the outer surface of the first particle PTC1, or a region from about 10 nm depth to about 2 µm depth.

Since the first particle PTC1 may further include a grain boundary coating part, the structural stability may be strengthened, and a coating layer may be formed substantially uniformly on the surface of the first particle PTC1. In addition, since the first particle PTC1 may further include the grain boundary coating part, the electrical conductivity of the first particle PTC1 may be further improved.

The first particle PTC1 may further include carbon derived from the above-described coating layer and/or grain boundary coating layer. An amount of carbon element in the first particle PTC1 may be in a range of about 0.5 wt% to about 10 wt%, about 1 wt% to about 3 wt%, or about 1.5 wt% to about 2.5 wt%.

The first particle PTC1 may have an average particle diameter (D50) in a range of about 500 nm to about 12 µm, about 2 µm to about 12 µm, about 3 µm to about 10 µm, or about 3 µm to about 7 µm. For example, the average particle diameter of the first particle PTC1 may be about 5 µm. The average particle diameter of the first particle PTC1 may be larger than the average particle diameter of the second particle PTC2 described above. In an example embodiment, the average particle diameter may be measured with a particle size analyzer. The average particle diameter may refer to a diameter (D50) of particles at a cumulative volume of about 50 vol% in a particle size distribution.

The second particle PTC2 may have a particle diameter in a range of about 50 nm to about 2 µm. For example, the particle diameter of the second particle PTC2 may be in a range of about 200 nm or less, about 50 nm to about 200 nm, or about 100 nm to about 200 nm. In an example embodiment, the particle diameter may refer to a value obtained by measuring diameters of about 30 second particles PTC2 randomly selected from an electron micrograph of a positive electrode active material. The second particles PTC2 may have a substantially uniform particle diameter. The particle diameter of the second particle PTC2 may be smaller than the particle diameter of the first primary particle. For example, the particle diameter of the second particle PTC2 may be about 100 nm smaller than the particle diameter of the first primary particle.

When the average particle diameters of the first particle and the second particle fall within the above-described ranges, respectively, and the second particles have a substantially uniform size, the rechargeable lithium battery including the same may have improved charge-discharge capacity and low-temperature capacity.

The first particle PTC1 may have a substantially spherical shape in which the second particles PTC2 are aggregated. With the second particles PTC2 being closely aggregated to each other, the first particle PTC1 may have the following characteristics. The first particle PTC1 may have a porosity in a range of about 20% to about 40%. Here, porosity (n) may be defined as the pore volume (Vₚ) divided by the total volume (Vₜ) of a particle. The span value, obtained by analysis on the first particle PTC1 with a particle size analyzer, may be in a range of about 0.3 to about 0.75. The span value is represented by (D₉₀-D₁₀)/D₅₀. The term "D₁₀" as used herein, refers to the average diameter of particles when the cumulative percentage reaches 10% by volume in the particle size distribution, and the term "D₉₀" as used herein, refers to the average diameter of particles when the cumulative percentage reaches 90% by volume in the particle size distribution.

The positive electrode active material according to an example embodiment of the present disclosure may have a specific surface area of about 30 m²/g or less. For example, the specific surface area of the positive electrode active material may be in a range of about 10 m²/g to about 30 m²/g, or about 15 m²/g to about 25 m²/g. The specific surface area may refer to the specific surface area obtained using the BET (Brunauer, Emmett and Teller) measurement method.

The first particle PTC1 may be crystalline. A crystal may be defined as a material in which the arrangement of atoms has a spatially repetitive pattern. The symmetry of a crystal structure may be expressed as a space group. The crystal structure of the first particle PTC1 may belong to the orthorhombic crystal system, and belongs to the Pbnm space group. The first particle PTC1 includes a (200) plane.

Hereinafter, the primary particle (first primary particle or second primary particle) and crystallinity of the first particle PTC1 is described in detail.

### Primary Particle of First Particle PTC1

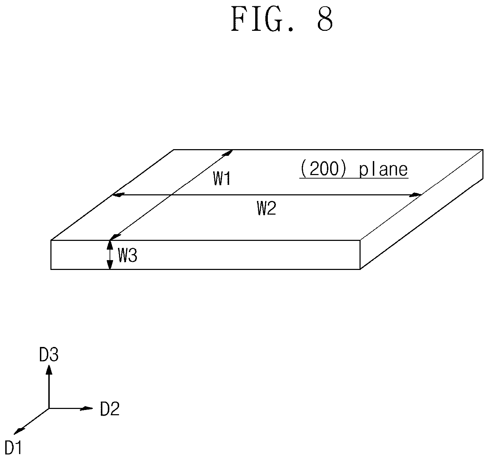

FIG. 8 is a perspective view illustrating a primary particle (first primary particle or second primary particle) of a first particle PTC1 according to example embodiments of the present disclosure.

Referring to FIG. 8, the first particle PTC1 may include a primary particle with a well-developed (200) plane. The (200) plane of the primary particle may have a first width W1 in a first direction D1 and a second width W2 in a second direction D2. The first direction D1 may cross the second direction D2. The first width W1 and the second width W2 may each be about 2 µm or less. A shape of the (200) plane may be a polygonal, circle, oval, atypical shape, etc., and is not limited thereto, but for example, the shape may be a quadrangle.

The primary particle may have a third width W3 in a third direction D3 passing through the (200) plane. That is, the primary particle may have the third width W3 in the third direction D3, and the third direction D3 may pass through the (200) plane. The third width W3 may be in a range of about 50 nm to about 2 µm. For example, the first to third widths W1 to W3 may be obtained through X-ray diffraction (XRD) discussed later.

For example, the primary particle of the first particle PTC1 may have a plate-like shape. That is, the shape of the primary particle of the first particle PTC1 may be a plate-like shape with a well-developed (200) plane. At this time, the third width W3 may be smaller than each, or at least one, of the first width W1 and the second width W2.

The primary particle of the first particle PTC1 may be configured to absorb and emit Li⁺ ions. The primary particle of the first particle PTC1 may be or include a primary particle having an olivine structure. Therefore, diffusion of Li⁺ ions may proceed only in 1-dimensional direction. That is, the diffusion of Li⁺ ions may proceed in a direction passing through the (200) plane of the primary particle of the first particle PTC1.

With the above-described shape, the primary particle of the first particle PTC1 according to an example embodiment of the present disclosure has the following characteristics. The primary particle may diffuse a large quantity of Li⁺ ions through the large (200) plane. When the third width W3 of the primary particle falls within the above-described numerical range, a distance over which Li⁺ ions diffuse in the direction toward the (200)-plane may become shorter, and the Li⁺ ions may diffuse faster.

The crystallinity of the first particle PTC1 may be seen through X-ray diffraction (XRD). An XRD spectrum obtained of the first particle using Cu-Kα radiation exhibits a plurality of peaks. The X-ray diffraction analysis may be performed using X'pert pro (PANalytical) using Cu-Kα radiation (1.54056Å). For example, the XRD spectrum exhibits a first peak P1 and a second peak P2, and the first peak P1 and the second peak P2 corresponds to the (200) plane and the (020) plane of the first particle PTC1, respectively. The first peak P1 may appear when the diffraction angle (2θ) ranges from about 15° to about 19°. The second peak P2 may appear when the diffraction angle (2θ) ranges from about 29.4° to about 30°. For example, the first peak P1 and the second peak P2 may appear at diffraction angles (2θ) of about 17° and about 29.7°, respectively.

The ratio (I_{P1}/I_{P2}) of an intensity of the first peak to an intensity of the second peak is about 0.55 or greater. For example, the ratio (I_{P1}/I_{P2}) of the intensity of the first peak over the intensity of the second peak is in a range of about 0.55 to about 0.75, for example, about 0.57 to about 0.71. The intensity of the peak may be the height of the corresponding peak in the XRD spectrum. When the ratio (I_{P1}/I_{P2}) of the intensity of the first peak to the intensity of the second peak falls within the above-described numerical range, the primary particle of the first particle PTC1 may have a shape with a well-developed (200) plane. Therefore, a large quantity of Li⁺ ions may diffuse through the large area of the (200) plane.

The first peak P1 has a full width at half maximum (FWHM) of at least about 0.14°. As the FWHM of the first peak P1 becomes larger, the third width W3 may become smaller. The FWHM of the first peak P1 is at least about 0.14°. For example, the FWHM of the first peak P1 is in a range of about 0.14° to about 0.25°. When the FWHM of the first peak P1 falls within the above-described numerical range, the first particle PTC1 may have crystallinity, and the primary particle of the first particle PTC1 may have a narrow third width W3. Therefore, the distance over which Li⁺ ions diffuse in the direction toward the (200) plane may become shorter, and the Li⁺ ions may diffuse faster.

A rechargeable lithium battery including the positive electrode active material according to an example embodiment of the present disclosure may have improved low-temperature characteristics. For example, by using the first particle PTC1 according to an example embodiment of the present disclosure, it may be possible to provide a rechargeable lithium battery exhibiting desired or improved performance even at a low temperature. In an example embodiment, when the rechargeable lithium battery is discharged with about 0.2 C, a discharge amount at about -20 °C may be in a range of about 80 mAh/g to about 130 mAh/g. In an example embodiment, when the rechargeable lithium battery is discharged with about 0.2 C, a discharge amount at about -20 °C compared with a discharge amount at about 25 °C (discharge amount at about -20 °C/discharge amount at about 25 °C) may be at least about 50%. For example, when the rechargeable lithium battery is discharged with about 0.2 C, a discharge amount at about -20 °C over a discharge amount at about 25 °C (discharge amount at about -20 °C/discharge amount at about 25 °C) may be in a range of about 50% to about 95%, or about 55% to about 85%.

### Positive Electrode Active Material Slurry

A positive electrode active material slurry according to an example embodiment of the present disclosure may include the positive electrode active material PTC1, the conductive material CDM, the binder BND, described above, and a solvent. Hereinafter, for the convenience of description, the same contents as the contents described with reference to FIGS. 6 to 8 are omitted, and the differences are mainly described in detail.

In an example embodiment, the positive electrode active material slurry may have a viscosity of about 7000 mPa·s or less. For example, the viscosity of the positive electrode active material slurry may be in a range of about 1000 mPa·s to about 7000 mPa·s, about 2000 mPa·s to about 6000 mPa·s, or about 3000 mPa·s to about 4000 mPa·s. When the viscosity of the positive electrode active material slurry falls within any of the above-described ranges, a positive electrode active material layer AML1 may be readily bound to a current collector COL1. For example, viscosity may be measured at 25°C using a Brookfield rotational viscometer.

For example, when a first particle PTC1 is a secondary particle, the positive electrode active material slurry, according to an example embodiment of the present disclosure, may have a desired viscosity while containing solids in large amount. For example, the positive electrode active material slurry may contain a range of about 60% to about 70% solids. A total solid content may refer to a converted value to percentage of the weight of a solid material remaining after solvent evaporation (that is, a dried mixture and current collector) with respect to the total weight of the current collector with the positive electrode active material slurry being applied in preparation of an electrode. The solids may include a positive electrode active material, a binder, and a conductive material. When the total solid content falls within the above-described range, the second particle PTC2 may have desired or improved binding force for an electrode current collector.

The first particle PTC1 may be bound to the current collector COL1 (see FIG. 1), and the binder BND may improve the binding force between the first particle PTC1 and the current collector COL1 (see FIG. 1).

For example, when the first particle PTC1 is a single particle, the positive electrode active material slurry, according to an example embodiment of the present disclosure, may contain a large amount of the binder BND in preparation of a full-cell. For example, since the first particle PTC1 has an substantially small first average particle diameter, the amount of the binder BND in the positive electrode active material layer AML1 may be large in order to secure a binding force in a desired range between the first particle PTC1 and the current collector COL1 (see FIG. 1) in the manufacture of the full-cell. For example, the amount of the binder BND may be in a range of about 2 wt% to about 5 wt%, or about 3 wt% to about 5 wt% with respect to 100 wt% of the positive electrode active material layer AML1.

For example, when the first particle PTC1 is a secondary particle, the positive electrode active material slurry according to an example embodiment of the present disclosure may contain a small amount of the binder BND in the preparation of the full-cell. For example, since the second particle PTC2 has a large average particle diameter, the amount of the binder BND in the positive electrode active material layer AML1 may be relatively small in order to secure the binding force in a desired range between the first particle PTC1 and the current collector COL1 (see FIG. 1) in the manufacture of the full-cell. For example, the amount of the binder BND may be in a range of about 0.5 wt% to about 3 wt%, or about 0.5 wt% to about 2 wt% with respect to 100 wt% of the positive electrode active material layer AML1. For example, in the manufacture of the full-cell, a smaller amount of the binder BND may be required when the first particle PTC1 is a secondary particle than when the first particle PTC1 is a single particle. Accordingly, the resistance of the rechargeable lithium battery, including the first particle PTC1 that is a secondary particle, may be reduced.

### Preparation Method of Positive Electrode Active Material

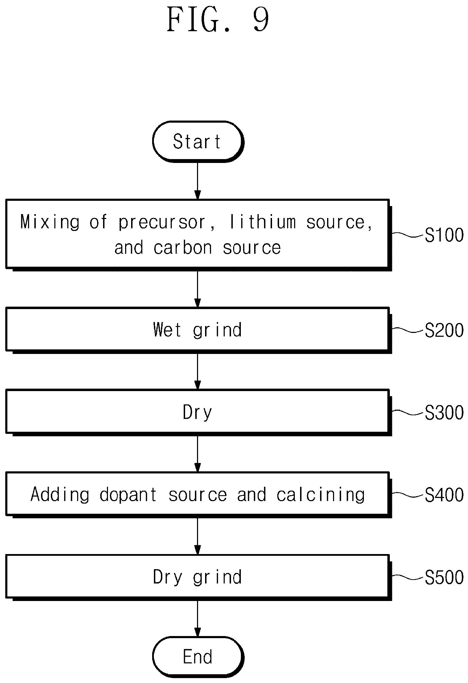

FIG. 9 is a flowchart illustrating a preparation method of a positive electrode active material, according to example embodiments of the present disclosure. Referring to FIG. 9, the preparation of a first particle PTC1, according to example embodiments of the present disclosure illustrated in FIG. 6 and FIG. 7, respectively, is described in more detail.

An iron phosphate precursor (or manganese iron phosphate precursor), a lithium source, and a carbon source may be added to a solvent and mixed to form a first mixture (S100). For example, the solvent may be or include water, ethanol, and the like.

The iron phosphate precursor may be or include a compound containing both iron (Fe) and phosphorus (P), or a mixture of an iron (Fe)-containing compound and a phosphorus (P)-containing compound. For example, the iron phosphate precursor may include FePO₄·H₂O, or a mixture of FeSO₄ and H₃PO₄. For example, the iron phosphate precursor may include FePO₄ or a mixture of FeSO₄ and H₃PO₄.

The manganese iron phosphate precursor may be or include a compound containing all of manganese (Mn), iron (Fe), and phosphorus (P); a mixture of a manganese (Mn)-containing compound and an iron (Fe) and phosphorus (P)-containing compound; or a mixture of a manganese (Mn)-containing compound, an iron (Fe)-containing compound, and a phosphorus (P)-containing compound. For example, the manganese iron phosphate precursor may include MnₓFe₁₋ₓPO₄·H₂O; a mixture of MnCO₃ and FePO₄·H₂O; or a mixture of MnCO₃, FeSO₄, and H₃PO₄. Here, x may be in a range of about 0.2 to about 0.8.

The lithium source may include at least one of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The carbon source may include at least one of glucose, sucrose, fructose, cellulose, starch, citric acid, polyacrylic acid, polyethylene glycol, and dopamine.

Wet grinding may be performed on the first mixture (S200). For the wet grinding, a general wet mill capable of temperature control may be used. In particular, at least one of a beads mill, a ball mill, an attrition mill, an apex mill, a super mill, and a basket mill may be used for the wet grinding. Through the wet grinding process, particles in the mixture may be ground to a fine size.

According to an example embodiment of the present disclosure, the wet grinding (S200) may also be omitted. In particular, in order to maximize the average particle diameter of the first particle PTC1 to be finally prepared, the wet grinding (S200) of precursor particles may also be omitted.

The solvent may be removed from the first mixture to form a dried first mixture (S300).

When preparing the first particle PTC1 in FIG. 6, according to an example embodiment of the present disclosure, the forming of the dried first mixture may include performing direct evaporation on the mixture. For example, the direct evaporation may include static drying or spray drying.

When preparing the first particle PTC1 in FIG. 7, according to another example embodiment of the present disclosure, the forming of the dried first mixture may include performing spray drying on the mixture. A generally used spray-drying device may be used for the spray drying. For example, the spray drying may be performed by using at least one of an ultrasonic spray-drying device, an air nozzle spray-drying device, an ultrasonic nozzle spray-drying device, a filter expansion droplet-generating device, and an electrostatic spray-drying device.

The particles, finely reduced to a size of a primary particle after the wet-grinding process, may be aggregated to each other through the spray-drying process to thereby form a secondary particle. Therefore, by adjusting the flow amount and flow rate of carrier gas, temperature, the residence time in a reactor, internal pressure, and the like during the spray drying process, the first particle PTC1 may be formed into the secondary particle of a desired size.

In an example embodiment, the mixture to be spray-dried may have a total solid content (TSC) in a range of about 20% to about 40%. The total solid content may refer to a converted value to percentage of the weight of a solid material remaining after solvent evaporation (that is, dried mixture) with respect to the total weight of the mixture (that is, spray liquid). For example, the spray liquid may have a total solid content of about 30 wt%.

When the total solid content is less than about 20%, disadvantages in that an average particle diameter of the second particle PTC2 decreases, and productivity is reduced, may occur. When the total solid content is greater than about 40%, adjusting the average particle diameter of the second particle PTC2 may become challenging, and the size difference between the second particles PTC2 may increase.

The spray liquid according to this example embodiment may have a viscosity in a range of about 1500 mPa·s to about 2500 mPa·s with the above-mentioned total solid content. For example, the spray liquid may have a viscosity of about 2000 mPa·s. For example, viscosity may be measured at 25°C using a Brookfield rotational viscometer.

In an example embodiment, an input rate for the spray drying may be in a range of about 0.1 kg/min to about 2 kg/min. For example, the input rate for the spray drying may be about 0.5 kg/min to about 1 kg/min. The input rate for the spray drying may be defined as the weight of a solvent and raw material mixture added per minute. In an example embodiment, the input rate for the spray drying according to an example embodiment of the present disclosure may be about 0.5 kg/min.

In an example embodiment, the spray drying may be performed at a temperature in a range of about 100 °C to about 300 °C. For example, the spray drying may be performed at a temperature of about 200 °C to about 300 °C, at a temperature higher than about 200 °C and lower than or equal to about 300 °C, or at a temperature of about 230 °C to about 270 °C. Spray gas (for example, air), used for the spray drying, may be injected at a first temperature, and discharged at a second temperature. For example, the first temperature may be in a range of about 200 °C to about 250 °C. The second temperature may be in a range of about 80 °C to about 150 °C.

The spray liquid may have an input pressure in a range of about 0.3 MPa to about 0.7 MPa. For example, the input pressure of the spray liquid may be about 0.5 MPa.

When the input rate, the input pressure, and the temperature for the spray drying fall within any of the above-described ranges, respectively, the first particle PTC1 may have a substantially spherical shape, and may have a desired porosity.

When the input rate and the temperature for the spray drying fall within any of the above-described ranges, respectively, the first particle PTC1 may have a desired size and shape. Accordingly, in the XRD spectrum, the FWHM of the first peak P1 and the ratio (I_{P1}/I_{P2}) of the intensity of the first peak to the intensity of the second peak may fall within desired numerical ranges, respectively.

The spray liquid for the spray drying may have a flow rate in a range of about 30 ml/min to about 80 ml/min. When the flow rate is less than about 30 ml/min, disadvantages of nozzle clogging, reduced productivity, and the like may occur. When the flow rate is greater than about 80 ml/min, due to moisture condensation in the spray-drying device, the mixture may not be completely dried.

A second mixture in which a dopant source is mixed in the dried first mixture may be calcined (S400).

The dopant source may include a dopant metal-containing oxide and/or a dopant metal-containing chloride. For example, the dopant source may include at least one of a Mg-containing oxide, a Mg-containing chloride, a Ti-containing oxide, a Ti-containing chloride, a V-containing oxide, a V-containing chloride, an Al-containing oxide, and an Al-containing chloride. For example, the dopant source may include at least one of the Ti-containing oxide or the Ti-containing chloride.

An input amount of the dopant source may be about 10,000 ppm or less. For example, the input amount of the dopant source may be in a range of about 0 ppm to about 10,000 ppm, about 500 ppm to about 10,000 ppm, or about 1000 ppm to about 3000 ppm. In an example embodiment, the input of the dopant source may be omitted.

The calcination may be performed in an inert atmosphere. The inert atmosphere may be or include a nitrogen atmosphere and/or an argon atmosphere. The temperature at which the calcination process is performed may be in a range of about 500 °C to about 1000 °C, about 600 °C to about 800°C, about 650 °C to about 750 °C, or about 690 °C to about 750 °C. The execution time of the calcination process may be in a range of about 4 hours to about 20 hours, or about 6 hours to about 12 hours. As the dried mixture is calcined, the first particle PTC1 containing the compound represented by Formula 1, described above, may be formed.

When the input amount of the dopant source and the calcination temperature fall within any of the above-described numerical ranges, respectively, the first particle PTC1 may have a desired size and shape. Accordingly, in the XRD spectrum, the FWHM of the first peak P1 and the ratio (I_{P1}/I_{P2}) of the intensity of the first peak to the intensity of the second peak may fall within desired numerical ranges, respectively.

Dry grinding may be performed on the calcined first particle PTC1 (S500). The calcined mixture may be ground using, e.g., an air jet mill, and the like.

In preparation of the first particle PTC1 illustrated in FIG. 6, according to an example embodiment of the present disclosure, the calcined mixture may be ground at a rotation speed of at least about 7000 rpm. For example, the calcined mixture may be ground at a rotation speed in a range of about 7000 rpm to about 10,000 rpm, or about 7500 rpm to about 9000 rpm. Accordingly, the first particle PTC1 may have a form of a single particle as illustrated in FIG. 6.

In preparation of the first particle PTC1 illustrated in FIG. 7, according to another example embodiment of the present disclosure, the calcined mixture may be ground at a rotation speed in a range of about 0 rpm to about 7000 rpm. For example, the calcined mixture may be ground at a rotation speed of about 4000 rpm to about 7000 rpm, about 4000 rpm to about 6000 rpm, or about 4500 rpm to about 5000 rpm. Unlike the preparation of the positive electrode active material in FIG. 6, the grinding after calcination (S500) may be performed under relatively mild conditions. In the preparation of the positive electrode active material in FIG. 7, for example, the dry grinding (S500) may also be omitted. When the rotation speed in the grinding (S500) falls within any of the above-mentioned ranges, the first particle PTC1 may be maintained to have a form of a secondary particle. Accordingly, the first particle PTC1 may have a form of the secondary particle as illustrated in FIG. 7.

In the preparation of the first particle PTC1 in FIG. 7, according to an example embodiment of the present disclosure, a carbon source may be introduced to an iron phosphate precursor to form a carbon coating layer substantially uniformly on surfaces of primary particles. Thereafter, the primary particles may be closely aggregated through the spray drying to form a dense sphere-shaped secondary particle. As a result, the first particle PTC1 may include the stable carbon coating layer in the outside and inside of the first particle PTC1, and may thus have a relatively high carbon content. Due to the high carbon content of the first particle PTC1 in FIG. 7, the positive electrode active material layer AML1 may have improved conductivity.

In the preparation method of the positive electrode active material according to example embodiments of the present disclosure, after the dry grinding, filtration and iron removal processes may be included. Through the filtration and iron removal processes, the first particle PTC1 of a desired size may be obtained.

Analysis on a carbon element according to example embodiments of the present disclosure may be performed using an Elementar Micro Cube elemental analyzer. The specific operation method and conditions are as follows. A sample of 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide was detected using a thermal conductivity detector (TCD).

Scanning electron microscope-energy dispersive X-ray spectroscopy (SEM-EDS) and quantitative analyses on a particle surface were conducted to measure the carbon content according to example embodiments of the present disclosure. In addition to SEM-EDS, inductively coupled plasma-mass spectrometry (ICP-MS), inductively coupled plasma optical emission spectroscopy (ICP-OES), or the like may be configured to measure the carbon content.

Hereinafter, the present disclosure is described in more detail with reference to examples. However, the following examples are merely presented to exemplify the present disclosure, and the scope of the present disclosure is not limited thereto.

### Example 1: Preparation of First Particle PTC1 in the Form of Secondary Particle

A positive electrode active material, in which a FWHM of the first peak P1 was about 0.1489° and the ratio (I_{P1}/I_{P2}) of the intensity of the first peak to the intensity of the second peak was about 0.66 in an XRD spectrum obtained using Cu-Kα radiation, was prepared. The positive electrode active material included a first particle PTC1 which is a primary particle. A preparation method of the positive electrode active material is as follows.

An iron phosphate precursor (FePO₄·H₂O) and a lithium carbonate were mixed in a molar ratio of Fe:Li of about 1:1.03 to prepare a first mixture. 10 wt% of glucose was further added to the first mixture. The first mixture, which is a slurry, was dried over evaporation through spray drying under conditions of an input rate of about 0.5 kg/min, a spray pressure of about 0.5 MPa, and a temperature of about 230 °C. Titanium dioxide was added to the dried first mixture to prepare a second mixture. At this time, an input amount of the titanium dioxide was about 3000 ppm. The second mixture was calcined in a nitrogen atmosphere at about 750 °C and for about 10 hours to obtain a first particle in the form of a secondary particle. The formula of the first particle was LiFe_{0.994}Ti_{0.006}PO₄.

### Example 2: Preparation of First Particle PTC1 in the Form of Secondary Particle

A positive electrode active material, in which a FWHM of the first peak P1 was about 0.1554° and the ratio (I_{P1}/I_{P2}) of the intensity of the first peak to the intensity of the second peak was about 0.71, was prepared. The positive electrode active material was prepared in the same manner as that of Example 1 with a difference that the calcination temperature was about 730 °C.

### Example 3: Preparation of First Particle PTC1 in the Form of Secondary Particle

A positive electrode active material, in which a FWHM of the first peak P1 was about 0.1414° and the ratio (I_{P1}/I_{P2}) of the intensity of the first peak to the intensity of the second peak was about 0.57, was prepared. The positive electrode active material was prepared in the same manner as that of Example 1, with a difference that a manganese iron phosphate precursor (Mn_{0.6}Fe_{0.4}PO₄), instead of an iron phosphate precursor, was used, the input rate for spray drying was about 1.0 kg/min, the input amount of titanium dioxide was about 1000 ppm, and the calcination temperature was about 730 °C. The formula of the first particle was LiFe_{0.4}Mn_{0.598}Ti_{0.002}PO₄.

### Example 4: Preparation of First Particle PTC1 in Form of Secondary Particle

A positive electrode active material, in which a FWHM of the first peak P1 was about 0.1849° and the ratio (I_{P1}/I_{P2}) of the intensity of the first peak to the intensity of the second peak was about 0.58, was prepared. The positive electrode active material was prepared in the same manner as that of Example 1, with a difference that a manganese iron phosphate precursor (Mn_{0.6}Fe_{0.4}PO₄), instead of an iron phosphate precursor, was used, the input amount of titanium dioxide was about 1000 ppm, and the calcination temperature was about 700 °C. The formula of the first particle was LiFe_{0.4}Mn_{0.598}Ti_{0.002}PO₄.

### Example 5: Preparation of First Particle PTC1 in Form of Secondary Particle

A positive electrode active material, in which a FWHM of the first peak P1 was about 0.1657° and the ratio (I_{P1}/I_{P2}) of the intensity of the first peak to the intensity of the second peak was about 0.59, was prepared. The positive electrode active material was prepared in the same manner as that of Example 1, with a difference that a manganese iron phosphate precursor (Mn_{0.6}Fe_{0.4}PO₄), instead of an iron phosphate precursor, was used, the input amount of titanium dioxide was about 1000 ppm, and the calcination temperature was about 710 °C. The formula of the first particle was LiFe_{0.4}Mn_{0.598}Ti_{0.002}PO₄.

### Example 6: Preparation of First Particle PTC1 in the Form of Secondary Particle

A positive electrode active material, in which a FWHM of the first peak P1 was about 0.1677° and the ratio (I_{P1}/I_{P2}) of the intensity of the first peak to the intensity of the second peak was about 0.60, was prepared. The positive electrode active material was prepared in the same manner as that of Example 1, with a difference that a manganese iron phosphate precursor (Mn_{0.6}Fe_{0.4}PO₄), instead of an iron phosphate precursor, was used, the input amount of titanium dioxide was about 1500 ppm, and the calcination temperature was about 710 °C. The formula of the first particle was LiFe_{0.4}Mn_{0.597}Ti_{0.003}PO₄.

### Example 7: Preparation of First Particle PTC1 in the Form of Secondary Particle

A positive electrode active material, in which a FWHM of the first peak P1 was about 0.2397° and the ratio (I_{P1}/I_{P2}) of the intensity of the first peak to the intensity of the second peak was about 0.65, was prepared. The positive electrode active material was prepared in the same manner as that of Example 1, with a difference that a manganese iron phosphate precursor (Mn_{0.6}Fe_{0.4}PO₄), instead of an iron phosphate precursor, was used, the input amount of titanium dioxide was about 3000 ppm, and the calcination temperature was about 690 °C. The formula of the first particle was LiFe_{0.4}Mn_{0.594}Ti_{0.006}PO₄.

### Example 8: Preparation of First Particle PTC1 in the Form of Single Particle

A positive electrode active material, in which a FWHM of the first peak P1 was about 0.1611° and the ratio (I_{P1}/I_{P2}) of the intensity of the first peak to the intensity of the second peak was about 0.65, was prepared. The positive electrode active material included a first particle PTC1 which is a single particle. A preparation method of the positive electrode active material is as follows.

An iron phosphate precursor (FePO₄·H₂O) and a lithium carbonate were mixed in a molar ratio of Fe:Li of about 1:1.03 to prepare a first mixture. 10 wt% of glucose was further added to the first mixture. Wet grinding was performed on the first mixture by ball milling. The first mixture was dried over evaporation on a tray by heating, and then dried in a vacuum oven at about 85 °C for about 4 hours. A process of adding titanium dioxide to the dried first mixture was omitted. The dried first mixture was calcined in a nitrogen atmosphere at about 650 °C for about 10 hours. The calcined product was ground at a rotation speed of about 8000 rpm to obtain a first particle in the form of a single particle. The formula of the first particle was LiFePO₄.

### Comparative Example 1

A positive electrode active material, in which a FWHM of the first peak P1 was about 0.1272° and the ratio (I_{P1}/I_{P2}) of the intensity of the first peak to the intensity of the second peak was about 0.61, was prepared. The positive electrode active material was prepared in the same manner as that of Example 1, with a difference that the input rate for spray drying was about 2.0 kg/min, and the input amount of titanium dioxide was about 0 ppm. The formula of the first particle was LiFePO₄.

### Comparative Example 2

A positive electrode active material, in which a FWHM of the first peak P1 was about 0.1312° and the ratio (I_{P1}/I_{P2}) of the intensity of the first peak to the intensity of the second peak was about 0.64, was prepared. The positive electrode active material was prepared in the same manner as that of Example 1, with a difference that the input rate for spray drying was about 2.0 kg/min, the input amount of titanium dioxide was about 0 ppm, and the calcination temperature was about 730 °C. The formula of the first particle was LiFePO₄.

### Comparative Example 3

A positive electrode active material, in which a FWHM of the first peak P1 was about 0.1238° and the ratio (I_{P1}/I_{P2}) of the intensity of the first peak to the intensity of the second peak was about 0.68, was prepared. The positive electrode active material was prepared in the same manner as that of Example 1, with a difference that a manganese iron phosphate precursor (Mn_{0.6}Fe_{0.4}PO₄), instead of an iron phosphate precursor, was used, the input rate for spray drying was about 2.0 kg/min, and the calcination temperature was about 770 °C. The formula of the first particle was LiFe_{0.4}Mn_{0.594}Ti_{0.006}PO₄.

### Comparative Example 4

A positive electrode active material, in which a FWHM of the first peak P1 was about 0.1347° and the ratio (I_{P1}/I_{P2}) of the intensity of the first peak to the intensity of the second peak was about 0.66, was prepared. The positive electrode active material was prepared in the same manner as that of Example 1, with a difference that the input rate for spray drying was about 1.0 kg/min, the input amount of titanium dioxide was 1000 ppm, and the calcination temperature was about 800 °C. The formula of the first particle was LiFe_{0.998}Ti_{0.002}PO₄.

### Comparative Example 5

A positive electrode active material, in which a FWHM of the first peak P1 was about 0.1288° and the ratio (I_{P1}/I_{P2}) of the intensity of the first peak to the intensity of the second peak was about 0.64, was prepared. The positive electrode active material was prepared in the same manner as that of Example 1, with a difference that a manganese iron phosphate precursor (Mn_{0.6}Fe_{0.4}PO₄), instead of an iron phosphate precursor, was used, the input rate for spray drying was about 2.0 kg/min, the input amount of titanium dioxide was about 1000 ppm, and the calcination temperature was about 730 °C. The formula of the first particle was LiFe_{0.4}Mn_{0.598}Ti_{0.002}PO₄.

### Preparation of Positive Electrode

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied to an aluminium current collector and dried, and then rolling was performed to prepare a positive electrode.

### Manufacture of Rechargeable Lithium Battery

The prepared positive electrode and a lithium metal counter electrode, as a counter electrode, were used to prepare a 2032-type coin half-cell. A separator (thickness: about 16 µm) formed of a porous polyethylene (PE) film was interposed between the positive electrode and the lithium metal counter electrode, and an electrolyte solution was introduced to manufacture a rechargeable lithium battery. The electrolyte solution obtained by mixing LiPF₆ of 1.3 M in a mixed solvent containing ethylene carbonate (EC), ethylmethyl carbonate (EMC), and dimethyl carbonate (DMC) in a volume ratio of about 3:4:3 was used as an electrolyte. The various experimental parameters of Examples 1-8 and Comparative Examples 1-5 are listed in Table 1 below.

**Table 1:**

| Classification | Form | Drying type | Input rate (kg/min) | Drying temperature (°C) | Input amount of dopant source (ppm) | Calcination temperature (°C) |
|---|---|---|---|---|---|---|
| Example 1 | Secondary particle | Spray drying | 0.5 | 230 | 3000 | 750 |
| Example 2 | Secondary particle | Spray drying | 0.5 | 230 | 3000 | 730 |
| Example 3 | Secondary particle | Spray drying | 1 | 230 | 1000 | 730 |
| Example 4 | Secondary particle | Spray drying | 0.5 | 230 | 1000 | 700 |
| Example 5 | Secondary particle | Spray drying | 0.5 | 230 | 1000 | 710 |
| Example 6 | Secondary particle | Spray drying | 0.5 | 230 | 1500 | 710 |
| Example 7 | Secondary particle | Spray drying | 0.5 | 230 | 3000 | 690 |
| Example 8 | Single particle | Static drying | - | 85 | 0 | 650 |
| Comparative Example 1 | Secondary particle | Spray drying | 2 | 230 | 0 | 750 |
| Comparative Example 2 | Secondary particle | Spray drying | 2 | 230 | 0 | 730 |
| Comparative Example 3 | Secondary particle | Spray drying | 2 | 230 | 3000 | 770 |
| Comparative Example 4 | Secondary particle | Spray drying | 1 | 230 | 1000 | 800 |
| Comparative Example 5 | Secondary particle | Spray drying | 2 | 230 | 1000 | 730 |

### Evaluation Example 1: Surface Analysis of Positive Electrode Active Material

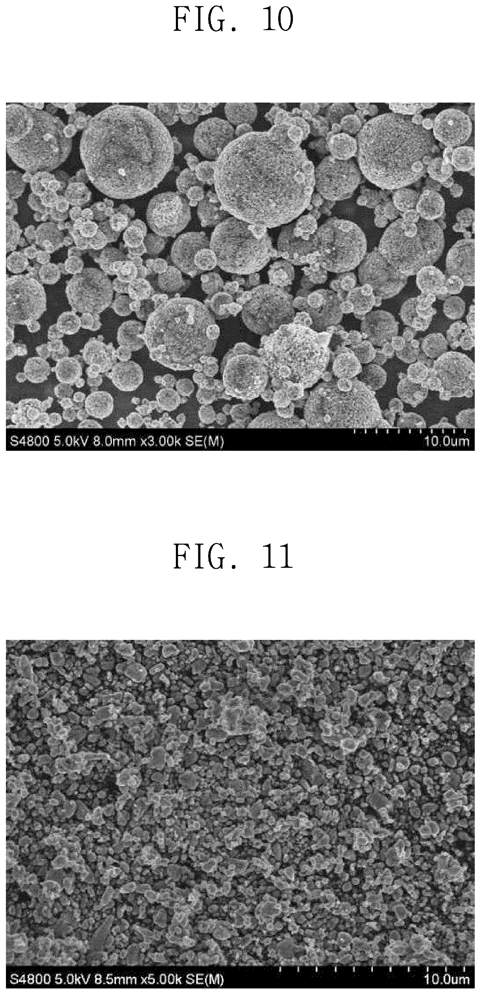

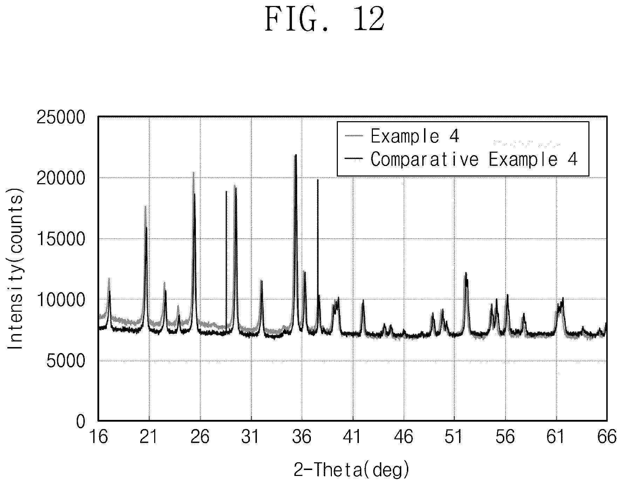

FIG. 10 shows a scanning electron microscope (SEM) image of the positive electrode active material prepared according to Example 1. FIG. 11 shows a SEM image of the positive electrode active material prepared according to Example 8. Results on XRD spectra for the positive electrode active materials according to examples and comparative examples were shown in FIG. 12 and Table 2 below.

**Table 2:**

| Classification | P1 FWHM (°) | I_{P1} (counts) | I_{P2} (counts) | I_{P1}/I_{P2} |
|---|---|---|---|---|
| Example 1 | 0.1489 | 16475 | 25078 | 0.66 |
| Example 2 | 0.1554 | 16494 | 23323 | 0.71 |
| Example 3 | 0.1414 | 13329 | 23553 | 0.57 |
| Example 4 | 0.1849 | 12651 | 21794 | 0.58 |
| Example 5 | 0.1657 | 12009 | 20423 | 0.59 |
| Example 6 | 0.1677 | 12309 | 20632 | 0.60 |
| Example 7 | 0.2397 | 12180 | 18841 | 0.65 |
| Example 8 | 0.1611 | 13230 | 20353 | 0.65 |
| Comparative Example 1 | 0.1272 | 17417 | 28471 | 0.61 |
| Comparative Example 2 | 0.1312 | 18644 | 29223 | 0.64 |
| Comparative Example 3 | 0.1238 | 18266 | 26825 | 0.68 |
| Comparative Example 4 | 0.1347 | 17058 | 25930 | 0.66 |
| Comparative Example 5 | 0.1288 | 17666 | 27427 | 0.64 |

Referring to FIG. 10, the positive electrode active material according to Example 1 of the present disclosure has a substantially sphere-shaped secondary particle in which a plurality of primary particles is aggregated. Referring to FIG. 11, the positive electrode active material according to Example 8 of the present disclosure has a fine single particle. Referring to FIGS. 10 and 11, the particle diameter of the primary particle is in a range of about 50 nm to about 2 µm.

Referring to FIG. 12 and Table 2, the first peak P1 and the second peak P2 appeared at diffraction angles (2θ) of around 17° and around 29.7°, respectively. Compared with the positive electrode active materials according to Comparative Examples 1 to 5, the positive electrode active materials according to Examples 1 to 8 had larger values of FWHM of the first peak P1. The values of FWHM of the first peak P1 of the positive electrode active materials according to Examples 1 to 8 were at least about 0.14°. The ratios (I_{P1}/I_{P2}) of the positive electrode active materials according to Examples 1 to 8 were at least about 0.57.

### Evaluation Example 3: Evaluation of Battery Characteristics

Characteristics of rechargeable lithium batteries prepared using the positive electrode active materials according to Examples 1 to 8 and Comparative Examples 1 to 5 were evaluated.

For initial charging and discharging, the rechargeable lithium battery was initially charged under conditions of a constant current (0.2 C) and a constant voltage (in the case of LFP, 3.8 V, and in the case of LMFP, 4.25 V) (cut-off 0.05C), was rested for about 10 minutes and then discharged with a constant current (0.2 C) until a voltage reached 2.5 V. In addition, a coin cell was additionally manufactured and then the batteries were initially charged at a constant current of 0.2 C and a constant voltage (3.8 V for LFP, 4.25 V for LMFP) (cut-off 0.05C), and after 10 minutes of rest, discharged up to 2.5 V at a constant current of 0.2 C and additionally charged, and measure the discharge capacity at about -20 °C. The results of evaluating the battery characteristics were listed in Table 3 below.

**Table 3:**

| Classification | Charge amount with 0.2 C (mAh/g) (at 25 °C) | Discharge amount with 0.2 C (mAh/g) (at 25 °C) | Efficiency with 0.2 C (%) (at 25 °C) | Discharge amount with 0.2 C (mAh/g) (at -20 °C) |
|---|---|---|---|---|
| Example 1 | 161 | 156.7 | 97.3 | 93.7 |
| Example 2 | 163.9 | 159.5 | 97.3 | 92.6 |
| Example 3 | 159.4 | 149.3 | 93.6 | 103.6 |
| Example 4 | 147.7 | 137.8 | 93.3 | 103.1 |
| Example 5 | 155.9 | 145.8 | 93.5 | 105 |
| Example 6 | 159.5 | 149.3 | 93.6 | 115.3 |
| Example 7 | 159.9 | 152.6 | 95.4 | 126.7 |
| Example 8 | 158.7 | 155.1 | 97.7 | 86.5 |
| Comparative Example 1 | 162.4 | 155.5 | 95.8 | 52.4 |
| Comparative Example 2 | 163.7 | 155.5 | 95 | 53.2 |
| Comparative Example 3 | 162 | 155.1 | 95.8 | 56.1 |
| Comparative Example 4 | 159.5 | 154.3 | 96.7 | 56.1 |
| Comparative Example 5 | 160.8 | 153.4 | 95.4 | 42.6 |

Referring to Table 3, the rechargeable batteries according to Examples 1 to 8 of the present disclosure had desired or improved low-temperature capacities. In particular, the rechargeable batteries according to Examples 1 to 8 of the present disclosure had higher discharge amounts at about -20 °C, compared with the rechargeable batteries according to Comparative Examples 1 to 5. In addition, unlike the rechargeable batteries according to Comparative Examples 1 to 5, in the rechargeable batteries according to Examples 1 to 8, the discharge amount at about - 20 °C compared with the discharge amount at about 25 °C (discharge amount at about -20 °C/discharge amount at about 25 °C) was at least about 50% when the batteries were discharged with about 0.2 C.

Therefore, when the FWHM of the first peak and the ratio of I_{P1}/I_{P2} fall within the above-described ranges, respectively, the low-temperature characteristics of the rechargeable lithium battery was significantly improved.

A positive electrode active material according to an example embodiment of the present disclosure may have improved electrical conductivity, mixture density, capacity, and energy density. In addition, the positive electrode active material according to an example embodiment of the present disclosure may rapidly diffuse a large quantity of Li⁺ ions. A rechargeable lithium battery according to an example embodiment of the present disclosure may have a relatively high operating voltage and high charge-discharge efficiency, and improved low-temperature characteristics.

Although the example embodiments of the present disclosure have been described with reference to the accompanying drawings, it is understood that the present disclosure should not be limited to these example embodiments, but various changes and modifications can be made by one ordinary skilled in the art within the scope of the present disclosure as hereinafter claimed. Therefore, the example embodiments described above should be understood in all respects as illustrative and not limiting.

Embodiments are set out in the following clauses:
Clause 1. A preparation method of a positive electrode active material, the method comprising:
   mixing an iron phosphate precursor, a lithium source, and a carbon source to form a first mixture;
   drying the first mixture; and
   calcining a second mixture in which the dried first mixture and a dopant source are mixed,
   wherein the dopant source includes at least one of a magnesium compound, a titanium compound, a vanadium compound, and an aluminum compound.
Clause 2. The preparation method of clause 1, wherein:
   the drying comprises spray drying, and
   an input rate for the spray drying is in a range of about 0.5 kg/min to about 1 kg/min.
Clause 3. The preparation method of clause 1 or clause 2, wherein a temperature at which the drying is performed is in a range of about 100 °C to about 300 °C.
Clause 4. The preparation method of any one of clauses 1 to 3, wherein an input amount of the dopant source is about 10,000 ppm or less.
Clause 5. The preparation method of any one of clauses 1 to 4, wherein a temperature at which the calcining is performed is in a range of about 500 °C to about 1000 °C.

## Claims

1. A positive electrode active material comprising:
a first particle which has an olivine structure, and
a crystal structure that belongs to a Pbnm space group,
wherein:
an X-ray diffraction (XRD) spectrum of the positive electrode active material obtained using Cu-Kα radiation exhibits a first peak corresponding to a (200) plane of the first particle and a second peak corresponding to a (020) plane of the first particle,
a full width at half maximum (FWHM) of the first peak is in a range of at least about 0.14°, and
a ratio of an intensity of the first peak to an intensity of the second peak is in a range of at least about 0.55.

2. The positive electrode active material of claim 1, wherein the first peak appears when a diffraction angle (2Θ) ranges from about 15° to about 19°.

3. The positive electrode active material of claim 1 or claim 2, wherein the second peak appears when a diffraction angle (2Θ) ranges from about 29.4° to about 30°.

4. The positive electrode active material of any one of claims 1 to 3, wherein
the full width at half maximum (FWHM) of the first peak is in a range of about 0.14° to about 0.25°, and
the ratio of an intensity of the first peak to an intensity of the second peak is in a range of about 0.55 to about 0.75.

5. The positive electrode active material of claim 4, wherein the (200) plane comprises:
a first width in a first direction; and
a second width in a second direction crossing the first direction, and
at least one of the first width and the second width is about 2 µm or less.

6. The positive electrode active material of claim 4 or claim 5, wherein the primary particle has a third width in a third direction passing through the (200) plane, and
the third width is in a range of about 50 nm to about 2 µm.

7. The positive electrode active material of any one of claims 4 to 6, wherein a shape of the primary particle comprises a plate-like shape.

8. The positive electrode active material of any one of claims 4 to 7, wherein diffusion of Li⁺ ions is configured to proceed in a direction passing through the (200) plane of the primary particle.

9. The positive electrode active material of any one of claims 1 to 8, wherein the first particle comprises a compound represented by Formula 1:
Formula 1: LiₐFeₓMn_{1-(x+y)}B_{y}PO_{4-c}
where, in Formula 1: 0.8<a≤1.2, 0≤x≤1, 0≤y≤0.05, and 0≤c≤0.05, and B is at least one of Mg, Ti, V, and Al.

10. The positive electrode active material of any one of claims 1 to 9, wherein the first particle is a single particle.

11. The positive electrode active material of any one of claims 1 to 10, wherein the first particle comprises a plurality of secondary particles that are aggregated with each other.

12. The positive electrode active material of any one of claims 1 to 10, wherein:
the first particle comprises a coating layer comprising carbon, and
an amount of carbon in the first particle is in a range of about 1.5 wt% to about 2.5 wt%.

13. The positive electrode active material of any one of claims 1 to 12, wherein a BET specific surface area of the positive electrode active material is about 30 m²/g or less.

14. A preparation method of a positive electrode active material, the method comprising:
mixing an iron phosphate precursor, a lithium source, and a carbon source to form a first mixture;
drying the first mixture; and
calcining a second mixture in which the dried first mixture and a dopant source are mixed,
wherein the dopant source includes at least one of a magnesium compound, a titanium compound, a vanadium compound, and an aluminium compound.

15. A rechargeable lithium battery comprising:
a positive electrode,
a negative electrode,
a separator, and
an electrolyte solution,
wherein the positive electrode includes the positive electrode active material of any one of claims 1 to 13.
